# EUROPEAN PATENT SPECIFICATION

(11) **EP 2 070 405 B1**
(45) Date of publication and mention of the grant of the patent: **26.10.2011**
(21) Application number: 07425785.8
(22) Date of filing: 11.12.2007
(51) Int. Cl.: A01G 1/06

(54) **A technique for engrafting plants and a tool for implementing the technique**
Verfahren zur Einpflanzung von Pflanzen und Werkzeug zur Anwendung des Verfahrens
Technique de greffe de plantes et outil de mise en oeuvre de la technique

(43) Date of publication of application: 17.06.2009
(73) Proprietor: Fornasier, Ida, Trieste (IT)
(72) Inventor: Fornasier, Leandro, deceased (IT)
(74) Representative: Ferraiolo, Ruggero

(56) References cited:
- FR-A- 633 004
- FR-A- 2 561 860
- FR-A- 2 870 430
- US-A- 4 098 020

## Description

### Field of the invention

The present invention regards a technique for engrafting plants and a tool for implementing the technique. The technique and instrument are suitable for engrafting plants in a vegetative pickup step or not, for fruit trees or ornamental plants already well established after transplant, where the graft-holder and the graft have a diameter at least close to that of a vine shoot or rose stem variable in the range of 6-12 mm, and on branches, especially of fruit trees, obviously even of a diameter exceeding 12 mm.

### State of the art

The use of engrafting in agriculture has been known for centuries and both the techniques and tools for implementing them, range from the knives appropriate for producing "split" grafts, "near" grafts by an English double split or an "eye", up to the latest pedal-actuated bench-scale machines and known tools operating with milling cutters for producing the indented grafts known as of a "tenon-mortise" types and the so-called "omega" grafts.

Document FR 633.004 is known that discloses a method and a machine adapted to engrafting vine shoots by making parallel cuts in a selected section of a shoot presenting a high number of living cells. In particular, the machine comprises groups of parallel milling cutters suitably spaced, each group being placed at an opposite end of a motor shaft extending from each side of the motor itself.

At present, the grafts on transplanted plants must still be manually produced by an expert grafter using an appropriate knife or special tongs as used for the "omega" graft.

### Drawbacks in the state of the art

The use of an engrafting knife and tongs implies above all that the grafter be an expert in his technique, and also involves a considerable amount of time, especially when the operation is to be performed on a substantial number of plants with a highly compact fibro-vascular structure. It must further be added that with the known techniques and means the engrafting requires a binding or wrapping of a very accurate and long-lasting type.

### Summary of the invention

The invention comprises a technique for preparing the graft exchanging surfaces and a portable tool for implementing the technique.

It should be premised that the term "perpendicular cut" is used to mean that the cut is done at 90° from the longitudinal axis which the portion (graft holder or graft) presents in the engrafting zone, and that the terms "axial" and "longitudinal" are used to designate the coincidence with the central longitudinal axis of the portion in the engrafting zone and with a direction parallel to the longitudinal axis of said portion, respectively; the term "transversal axis" of a graft holder or graft is used to designate any of the axes passing through the centre and set perpendicular to the longitudinal axis.

It is also made clear that in the inventive technique the longitudinal hollow seats and longitudinal extensions of the two portions are well defined and matching each other, which means that the portions are worked with the same tool, with the same milling cutters mounted on the tool and with the same reciprocal position of the milling cutters. After axially rotating one portion 180° with respect to the other, the longitudinal extensions of one portion end up to be exactly facing the longitudinal hollow seats of the other, and the grafting is done by inserting the longitudinal extensions into the hollow seats.

It is further clarified that the term "inner face" of a milling cutter designates the face lying opposite the inner face of the other milling cutter.

It is finally clarified that the term "inner face" of a hollow seat indicates the face adjacent to the inner face of the other hollow seat.

The technique according to the invention comprises the steps of:
i) perpendicularly cutting the graft holder and the graft in the respective areas chosen for the engrafting,
ii) mechanically removing material from the cut-out extremities of the graft holder and of the graft by using a milling machine fitted with two parallel milling cutters of different thickness, where the inner face of the milling cutter of smaller thickness lies in the plane passed by the central longitudinal axis of the graft holder and of the graft, so as to create longitudinal hollow seats and longitudinal extensions matching each other, while the extensions of one portion are exactly interpenetrating the hollow seats of the other portion, and the longitudinal central axes of the graft holder and of the graft end up to be coincident; and
iii) coupling the extremities of the graft holder and of the graft rotated 180° around its longitudinal axis, so that the longitudinal extensions of one portion enter into the hollow seats of the other portion.

As a whole, the tool according to the invention comprises the following:
a) a fork-shaped element essentially in the shape of a V, in whose cavity the graft holder and the graft are held fast by hand one after the other while one central transversal axis of the same passes through the apex of the fork-shaped element;
b) two parallel milling cutters of different thickness held apart by a distancing element of a thickness equal to the thickness of the smaller milling cutter where the inner face of the latter milling cutter lies in the plane passed by the central longitudinal axis of the graft holder and of the graft, are moved by an electrical motor esigned to remove two longitudinal portions of the graft holder, and two equal longitudinal portions of the graft held fast in the fork-shaped element (the term equal" stands to mean that the longitudinal portions carved out in the graft holder are qual to the longitudinal portions carved out in the graft), thus creating hollow seats nd longitudinal extensions matching each other.
c) a battery powering the electric motor;
d) alternatively, an electrical cable connecting the electrical motor with a remote source of electrical power being a battery separated from the body of the tool, a portable current generator or a current outlet of a stationary electrical power plant connected to the motor by an electrical cable and a suitable interposed electrical transformer;
e) as a result of the solution illustrated at the preceding point, an extension of the motor shaft in the rear portion, for the mounting of an auxiliary pair of milling cutters; and
f) a kit of milling cutters of various diameter and thickness, a kit of spacers of different thicknesses to separate the two chosen milling cutters to be mounted on the tool, and a device to vary the transversal and longitudinal positions, positions, respectively, of the fork-shaped element so as to adapt it to the milling cutters eventually mounted on the tool and to hold it close to the cutting-out line of the milling cutters during the operation.

It is understood that the diameter, the thickness and the reciprocal distance of the milling cutters are chosen depending on the dimensions and botanical characteristics of the portions to be grafted. It is likewise understood that the milling cutters already known in the field have two, three or more teeth, or are milling cutters in the shape of a disc for circular saws with a high number of teeth.

It is also understood that the tool can be realized with the shaft on which the milling cutters are mounted being coincident with or parallel to the motor shaft or set an angle of up to 90° with respect to the motor shaft, in order to facilitate the work under certain conditions, such as when it is necessary to operate on the extremity of a graft-holder after transplant.

### Advantages of the invention

The main advantages of the technique and of the tool of the invention are in allowing the production of small grafts (vine shoots, rose stems, and the like) by using a single portable and lightweight tool, so portable and lightweight as to be capable of being kept in a pocket or in a grafter's bag, in its operating speed and in the precision and strength of the achieved graft. The graft achieved by interpenetrating the matching and closely coupled portions can in fact simplify the binding and wrapping step. A further advantage is represented by the fact of also allowing the production of large-size grafts (branches of trees and the like). Another, certainly not secondary advantage is represented in that the tool, being lightweight, portable and versatile in its general application, facilitates and encourages experiments and research studies aimed at producing new hybrids and plant varieties.

Other advantages are given by the fact of allowing interchanges between pairs of milling cutters and spacers of various diameters and thicknesses depending on the characteristics of the graft to be carried out, the penetrating depth of the milling cutters and the fact that the milling cutters, while sliding over the fork-shaped element, shave off the bark of the graft holder and of the graft at the level of the exchanging surfaces, thus producing very "clean" surfaces. Finally, the possibility of mounting, on the rear portion of the tool, a pair of milling cutters differing from that mounted on the front portion offers the advantage of quickly producing grafts of an unusual or unexpected kind, without having to remove the milling cutters that have been pre-arranged on the front side for the purpose of producing the grafts commonly employed by a user.

### Detailed description of the invention

The invention will now be described in detail through an example of an embodiment and with the aid of the simplified enclosed drawings, wherein the dimensions of the milling cutters and of the fork-shaped element are enlarged with respect to their real size, so as to render the drawings more effective and where
- Fig. 1 is a first partially sectionalized view,
- Fig. 2 is first prospective view,
- Fig. 3 is a vertical section,
- Fig. 4 is a first overall view,
- Fig. 5 is a side view, and
- Fig. 6 is a second overall view.

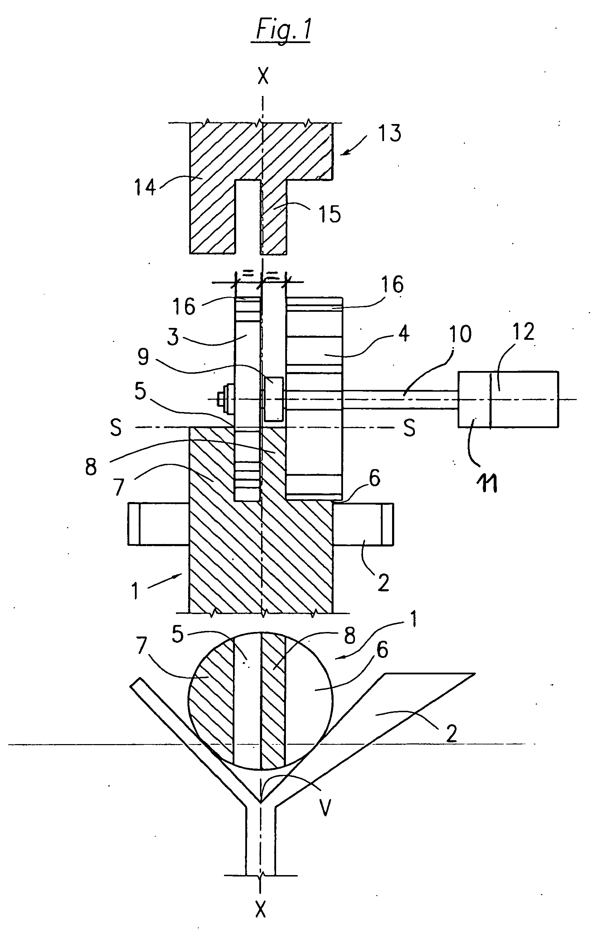

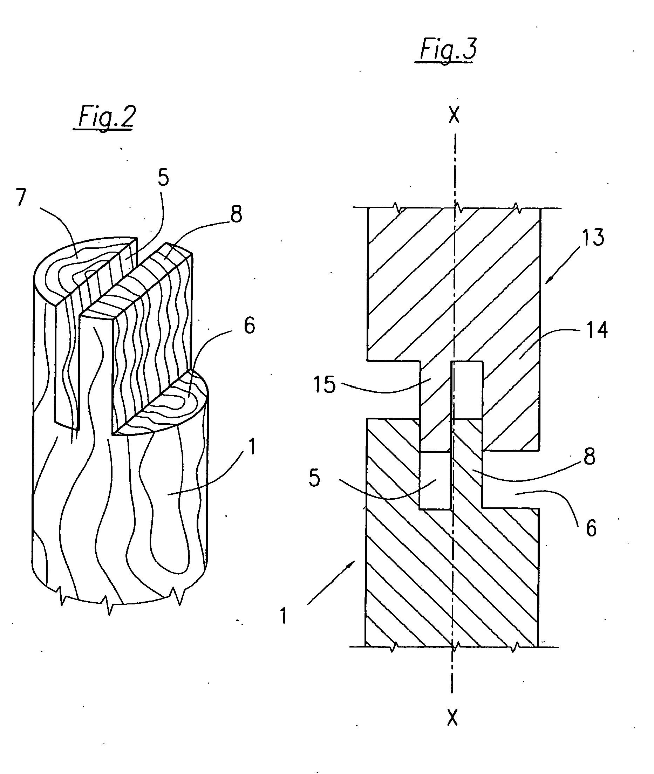

Fig. 1 shows a side view of the upper extremity of a graft holder 1 constituted of a vine shoot after transplanting, which has been cut-out perpendicularly along the chosen section S-S, and worked by the milling cutters 3,4. This extremity is held fast in the fork-shaped element 2 of the tool, an element that is shown as being far removed from its working position so as to clearly illustrate this exposure, as can be seen in the transversal view of the lower portion of the figure. The longitudinal central axis X-X of the graft holder passes through the apex V of this fork-shaped element. The milling cutters 3, 4 have shaped two longitudinal hollow seats 5, 6 and the longitudinal extensions 7, 8 which are better visible in Fig. 2. The milling cutters 3, 4 are appropriately spaced apart from each other by a suitable axial spacer 9, so as allow the longitudinal central axis X-X of the graft holder 1 to be contained in the inner face of the milling cutter 3, whose thickness coincides with the thickness of the spacing element 9. The two milling cutters are mounted on the shaft 10 of an electrical motor 11 powered by a battery 12 and are contained in the handle of the tool (not shown). The axial spacer 9 is part of a kit of axial spacers of different thicknesses, so as to allow the grafter to set the milling cutters at their most appropriate reciprocal distance, on a case-by-case basis. For convenience in the current description, the graft 13 is also aligned with the graft holder 1, so as to allow understanding the way the milling cutters are used to create the longitudinal extensions 14, 15 destined to couple with the axial hollow seats 5, 6. It should be observed that the same couple of milling cutters is used to work the extremity of the graft holder 1 and the extremity of the graft 13, and that in reality the graft 13 will be milled by holding it in the fork-shaped element 2 (as the graft holder 1 was held fast) and will then be rotated 180° to graft itself onto the graft holder, as shown in Fig. 2. The number 16 designates the teeth of the milling cutters. The fork-shaped element 2, whose walls are grazed by the teeth of the milling cutters during the operation, acts so that the bark of the graft holder and of the graft are shaved-off at the level of the exchange surfaces, thus producing very "clean" cuts.

Fig. 2 shows the extremity of a graft holder 1 worked according to the technique and the tool of the invention. The extensions 7, 8, the hollow seat 5 and the lateral seat 6 can be seen.

Fig. 3 shows the two portions 1 and 13 in their initial engrafting step: the extensions 14, 15 of the graft 13 are penetrating into the seats 5, 6 of the graft holders 1. The longitudinal central axes of the two portions coincide with the axis X-X passing the inner face of the longitudinal extension 8. The width of the hollow seat 5 coincides with the width of the extension 15.

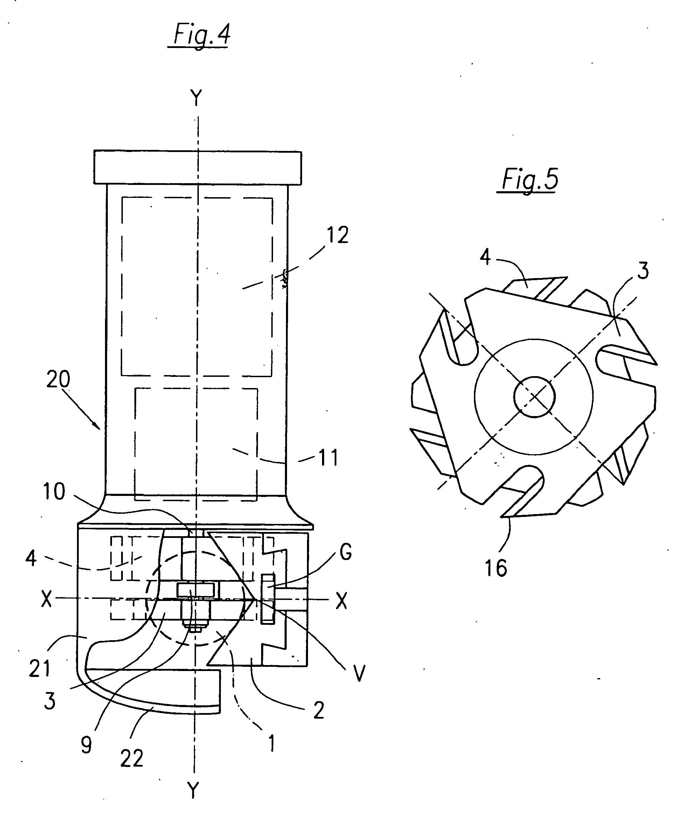

Fig. 4 shows the tool 20 as a whole. The handle of the tool contains a battery 11 that powers an electrical motor 12 whose shaft 10 mounts two milling cutters 3, 4 that are spaced apart by the spacer 9 and set in a radial direction partially protected by the cover 21 and in the front by the shield 22. At the level of the exposed portions of the two milling cutters, there is a fork-shaped element 2 fastened to the handle of the tool so as to receive a graft holder 1 to be worked in its hollow. It can be seen that the axis X-X passes through the inner face of the milling cutter 3, the centre of the graft holder 1 and the apex V of the fork-shaped element 2. The fork-shaped element 2 slides perpendicularly to the axis Y-Y along a guide G, and parallel to the axis Y-Y along another guide, not shown.

Fig. 5 shows the profile generally used for the milling cutters of a conventional mechanical engrafting machine. The milling cutter 3 partially covers the milling cutter 4, and 16 indicates the teeth of the milling cutters.

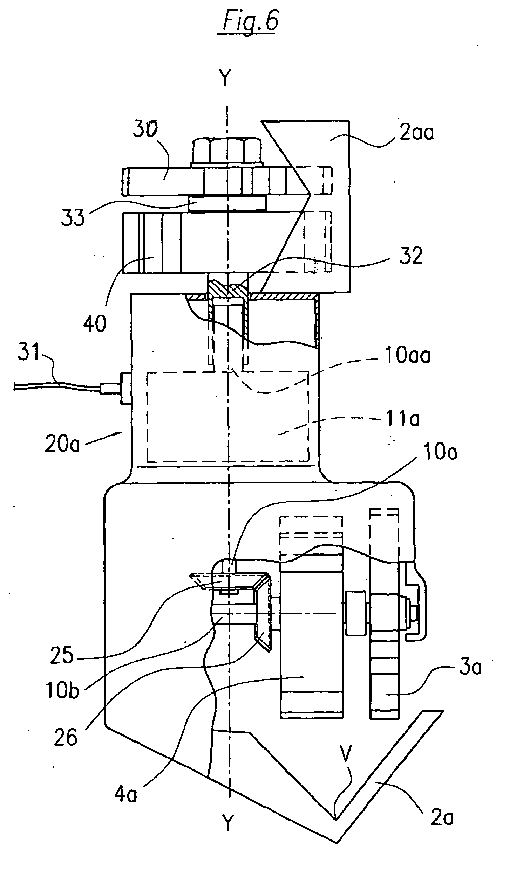

Fig. 6 shows a tool 20a that carries the pair of milling cutters described in Fig. 1 and a pair of auxiliary milling cutters 30, 40 mounted on the rear extension 10aa of the motor shaft 12a. It shows that the rotating shaft 10b of the milling cutters 3a and 4a is set up perpendicular to the rotating shaft 10a of the motor 11a. The transmission between the shafts 10a and 10b is conventionally realized by two conical gears 25 and 26. This tool is also fitted with a fork-shaped element 2a, whose apex V lies in the plane of the internal surface of the milling cutter 4a. It will be grasped that whenever the size of the milling cutter changes, the fork-shaped element 2 must be shifted in a transversal direction. This element will also be endowed with the possibility of shifting in a longitudinal direction, so as to make it possible to appropriately approach it to the cutting-out edge of the milling cutters during the material removing operation. This version of the tool does not contain a battery in its housing. The power supply to the motor 12a occurs through the electrical cable 13 that connects it to a suitable battery carried by the grafter in a shoulder bag. The rear extension 10aa of the motor shaft carries a square terminal section, so as to receive and hold the extremity of an auxiliary shaft 32 fast on the same, in which two auxiliary milling cutters 30, 40 are mounted and spaced apart by a spacing element 33. This assembly of auxiliary milling cutters comprises milling cutters of a size larger than that of the milling cutters 3, 4, so as to allow the engrafting of graft holders and grafts of a larger size or of a different consistency from those workable by using the milling cutters 3, 4, and a fork-shaped element 2aa is mounted with the same criteria shown in Fig. 1.

It is understood that the tool may be constructed to contain the portions mentioned above, except for the battery, which is to be kept separate as stated.

## Claims

1. Technique for engrafting plants comprising the cutting-out of the graft holder (1) and of the graft (13) perpendicularly in the respective sections (S-S) chosen for the graft and comprising the removing of material from the cut-out extremities by using a machine fitted with a pair of parallel milling cutters, comprising the following steps:
i/1. perpendicularly cutting the graft holder (1) and graft (13) in the respective areas chosen for the grafting;
ii/1. mechanically removing material from the cut-out extremities of the graft holder (1) and the graft (13) by using a milling machine (20) fitted with two parallel milling cutters of different thickness (3, 4), in which the inner face of the milling cutter of smaller thickness lies in the plane passed by the longitudinal central axis (X-X) of the graft holder and of the graft, so as to create two matching longitudinal hollow seats (5, 6) and longitudinal extensions (14, 15), the extensions of one portion end up being exactly capable of interpenetrating the hollow seats of the other portion, and the longitudinal central axes of the graft holder and the graft turn out to be coincident; and
iii/1. coupling the extremities of the graft holder (1) and graft (13) by allowing the longitudinal extensions (14, 15) of one portion to interpenetrate the hollow seats (5, 6) of the other portion.

2. Technique according to the claim 1 **characterized in that** the coupling of the graft holder (1) with the graft (13) comprises a form of mortise joint wherein two longitudinal central extensions (8, 15) are held fast by longitudinal lateral extensions (7, 14) of a thickness exceeding that of the central extensions.

3. Portable tool (20) for engrafting plants by mechanically removing material according to the technique claimed in claims 1, 2, **characterized in that** it comprises:
i/3. a fork-shaped element (2) essentially in the form of a V, in whose cavity, in the step (i) of the technique, the graft holder (1) or graft (13) are indifferently held fast by hand one after the other, while one transversal central axis of the same is passing through the apex (V) of the fork-shaped element (2);
ii/3. two parallel milling cutters (3, 4) of different thickness spaced apart by a spacing element (9) of a thickness equal to the thickness of the milling cutter of smaller thickness (3), in which the inner face of the latter milling cutter lies in the plane passed by the longitudinal axis (X-X) of the graft holder and of the graft, moved by an electrical motor (11) to remove two longitudinal portions of the graft holder (5, 6), and two equal longitudinal portions of the graft are held fast in the fork-shaped element (2), thus creating matching hollow seats (5, 6) and longitudinal extensions (14, 15), where the longitudinal axis (X-X) of the graft holder and of the graft lies on the inner face of one of the milling cutters.

4. Portable tool (20) according to claim 3 **characterized in that** it comprises a battery (12) adapted for supplying power to the electric motor (11).

5. Portable tool (20) according to the claim 3 **characterized in that** it comprises an electrical cable (31) connecting the electrical motor (11, 11a) with a source of electrical power as a battery separated from the body of the tool, a portable current generator or a current outlet of a stationary electrical power plant.

6. Portable tool (20) according to claims 3, 4, 5 **characterized in that** it comprises a removable pair of milling cutters (30, 40) mounted on a rear extension (10aa) of the shaft (10a) of the motor (11a).

## Patentansprüche

1. Technik zum Aufpfropfen von Pflanzen mit dem Ausschneiden der Unterlage (1) und des Edelreises (13) rechtwinklig in den jeweiligen Abschnitten (S-S), die für das Pfropfen ausgewählt wurden, und mit dem Entfernen von Material aus den ausgeschnittenen Extremitäten unter Verwendung einer Maschine, die mit einem Paar Parallelfräsen ausgestattet ist, mit den folgenden Schritten;
i/1. Rechtwinkliges Schneiden der Unterlagen (1) und des Edelreises (13) in den jeweiligen Bereichen, die für das Pfropfen ausgewählt sind,
ii/1. mechanisches Entfernen von Material aus den ausgeschnittenen Extremitäten der Unterlage (1) und des Edelreises (13) unter Verwendung einer Fräsmaschine (20), die mit zwei Parallelfräsern mit unterschiedlicher Dicke (3, 4) ausgestattet ist, wobei die Innenfläche des Fräsers mit geringerer Dicke in der Ebene liegt, die von der Längsmittenachse (X-X) der Unterlage und des Edelreises passiert wird, um so zwei übereinstimmende hohle Längssitze (5, 6) und Längserstreckungen (14, 15) zu bilden, wobei die Erstreckungen eines Endteils exakt in der Lage sind, in die hohlen Sitze des anderen Teils einzudringen und die Längsmittenachsen der Unterlage und des Edelreises koinzident sind, und
iii/1. Verbinden der Extremitäten der Unterlage (1) und des Edelreises (13) durch Ermöglichen, dass die Längserstreckungen (14, 15) eines Teils in die hohlen Sitze (5, 6) des anderen Teils eindringen.

2. Technik nach Anspruch 1, ***dadurch gekennzeichnet,* dass** das Verbinden der Unterlage (1) mit dem Edelreis (13) eine Art von Zapfverbindung bildet, wobei die beiden Längsmittenerstreckungen (8, 15) durch längliche Seitenerstreckungen (7, 14) mit einer Dicke, die die der Mittenerstreckungen übersteigt, festgehalten werden.

3. Tragbares Werkzeug (20) zum Aufpfropfen von Pflanzen durch mechanisches Entfernen von Material gemäß einer Technik nach Anspruch 1, 2, ***dadurch gekennzeichnet,* dass** es aufweist:
i/3. Ein gabelförmiges Element (2) im Wesentlichen in der Form eines V, in dessen Hohlraum, in Schritt (i) der Technik, die Unterlage (1) oder der Edelreis (13) eines nach dem anderen mit der Hand gehalten werden, wobei eine Quermittenachse desselben durch die Spitze (V) des gabelförmigen Elementes (2) passiert,
ii/3. zwei parallele Fräser (3, 4) mit unterschiedlicher Dicke, die durch ein Abstandselement (9) mit einer Dicke beabstandet gehalten werden, die gleich der Dicke des Fräsers mit geringerer Dicke (3) ist, wobei die Innenfläche des letzteren Fräsers in der Ebene liegt, die durch die Längsachsen (X-X) der Unterlage und des Edelreises passiert, die durch einen elektrischen Motor (11) bewegt werden, um zwei Längsteile der Unterlage (5, 6) und zwei Längsteile des Edelreises zu entfernen, die fest in dem gabelförmigen Element (2) gehalten werden, um **dadurch** zu übereinstimmende hohle Sitze (5, 6) und Längserstreckungen (14, 15) zu erzeugen, wobei die Längsachse (X-X) der Unterlage und des Edelreises auf der Innenfläche eines der Fräser liegen.

4. Tragbares Werkzeug (20) nach Anspruch 3, ***dadurch gekennzeichnet,* dass** es eine Batterie (12) aufweist, die zum Zuführen von Leistung an den Elektromotor (11) ausgebildet ist.

5. Tragbares Werkzeug (20) nach Anspruch 3, ***dadurch gekennzeichnet,* dass** es ein Elektrokabel (31) aufweist, das den Elektromotor (11, 11a) mit einer Quelle von Elektroleistung als einer Batterie, die vom Körper des Werkzeugs getrennt ist, einem tragbaren Stromgenerator oder einem Stromauslass eines stationären Kraftwerks verbindet.

6. Tragbares Werkzeug (20) nach Anspruch 3, 4, 5, ***dadurch gekennzeichnet,* dass** es ein entfernbares Paar von Fräsern (30, 40) aufweist, das auf einer Rückverlängerung (10aa) der Welle (10a) des Motors (11a) montiert ist.

## Revendications

1. Procédé de greffage de plantes comprenant :
- l'entaille du porte-greffe (1) et du greffon (13) perpendiculairement à la section respective (S-S) choisie pour le greffon, et
- l'enlèvement de la matière des extrémités découpées en utilisant une machine équipée d'une paire de couteaux de fraisage, parallèles, procédé comprenant les étapes suivantes :
i/1. découper perpendiculairement le porte-greffe (1) et le greffon (13) dans les zones respectives choisies pour la greffe,
ii/1. enlever mécaniquement la matière des extrémités découpées du porte-greffe (1) et du greffon (13) en utilisant la machine de fraisage (20) équipée de deux couteaux de fraisage parallèles d'épaisseur différente (3, 4) et dont la face intérieure du couteau de fraisage de plus petite épaisseur, se situe dans le plan passant par l'axe central longitudinal (X-X) du porte-greffe et du greffon de manière à réaliser deux sièges creux longitudinaux (5, 6) adaptés, et des extensions longitudinales (14, 15), les extensions d'une partie d'extrémité pourront interpénétrer exactement les sièges creux de l'autre partie et l'axe central longitudinal du porte-greffe et celui du greffon coïncident, et
iii/1. assembler les extrémités du porte-greffe (1) et du greffon (13) en permettant aux extensions longitudinales (14, 15) d'une partie de pénétrer dans les sièges creux (5, 6) de l'autre partie.

2. Procédé selon la revendication 1,
**caractérisé en ce que**
le couplage du greffon (13) au porte-greffe (1) consiste à réaliser un joint en mortaise dans lequel les deux extensions centrales longitudinales (8, 15) sont maintenues fermement par les extensions latérales longitudinales (7, 14) d'une épaisseur dépassant les extensions centrales.

3. Outil portatif (20) pour greffer des plantes par enlèvement mécanique de la matière selon le procédé des revendications 1 et 2,
**caractérisé en ce qu'**il comporte :
i/3. un élément (2) en forme de fourche essentiellement en V dont la cavité, au cours de l'étape (i) du procédé, permet de tenir fermement indifféremment le porte-greffe (1) ou le greffon (13), à la main, l'un après l'autre, alors que son axe central transversal passe par le sommet (V) de l'élément (2) en forme de fourche,
ii/3 deux couteaux de fraisage (3, 4), parallèles, d'épaisseur différente, espacés d'un élément d'espacement (9) d'épaisseur égale à l'épaisseur du couteau de fraisage de plus faible épaisseur (3) et la face intérieure de ce dernier couteau dé fraisage, se situe dans le plan passant par l'axe longitudinal (X-X) du porte-greffe et du greffon, les couteaux étant entraînés par un moteur électrique (11) pour enlever deux parties longitudinales du porte-greffon (5, 6) et deux parties longitudinales égales du greffon qui sont tenues fermement dans l'élément (2) en forme de fourche, créant ainsi des sièges creux (5, 6) adaptés et des extensions longitudinales (14, 15), l'axe longitudinal (X-X) du porte-greffe et celui du porte-greffon se situant sur la surface intérieure de l'un des couteaux de fraisage.

4. Outil portatif (20) selon la revendication 3,
**caractérisé en ce qu'**il comporte
une batterie (12) assurant l'alimentation du moteur électrique (11).

5. Outil portatif (20) selon la revendication 3,
**caractérisé en ce qu'**il comporte
un câble électrique (31) reliant le moteur électrique (11, 11a) à une source d'alimentation électrique telle qu'une batterie séparée du corps de l'outil, un générateur de courant, portatif, ou une prise de courant d'un réseau électrique fixe.

6. Outil portatif (20) selon les revendications 3, 4, 5,
**caractérisé en ce qu'**il comporte
une paire de couteaux de fraisage (30, 40) amovibles installés sur le prolongement arrière (10aa) de l'arbre 10a) du moteur (11a).
